# EUROPEAN PATENT APPLICATION

(11) **EP 0 552 820 A2**
(43) Date of publication of application: **28.07.1993**
(21) Application number: 93105400.1
(22) Date of filing: 08.05.1989
(51) Int. Cl.: G01N 21/64, G01N 21/65, B07C 5/342

(54) **Sorting diamonds or other minerals**

(30) Priority: 06.05.1988 GB 8810723; 06.05.1988 GB 8810724; 05.07.1988 GB 8815941; 07.07.1988 GB 8816156; 07.07.1988 GB 8816157; 07.07.1988 GB 8816164; 07.07.1988 GB 8816165; 07.07.1988 GB 8816167; 09.11.1988 GB 8826225; 23.03.1989 GB 8906853
(62) Divisional of application: 89304642.5
(71) Applicant: GERSAN ESTABLISHMENT, Fl-9490 Vaduz (LI)
(72) Inventor: Stewart, Andrew David Garry, Reading, Berkshire (GB); Smith, Robin Wyncliffe, Croydon, Surrey CR0 6XJ (GB); Smith, Martin Phillip, Wargrave, Berkshire RG10 8BB (GB); Brink, Daniel Johannes, The Willows, Pretoria R9A (ZA); Cooper, Martin, Marlow, Buckinghamshire SL7 2RE (GB); Welbourn, Christopher Mark, Sunningdale, Berkshire (GB); Spear, Paul Martyn, Reading, Berkshire RG6 4ED (GB)
(74) Representative: Lyndon-Stanford, Edward Willoughby Brooke

(57) **Abstract**

To sort diamonds from a large number of ore particles 2 conveyed along a wide feed path 1, a line is irradiated across the feed path 1 to excite Raman emission from the diamonds, emission from the ore particles 2 is collected using collection means 6 providing an aperture having an f number of one or less in the view looking across the feed path 1, a narrow band pass filter arrangement 9 filters out all emission from the ore particles except the Raman emission and such broad band luminescence as has frequencies in the narrow band, a signal is given responsive to the emission which passes through the filter arrangement 9, the effect of the broad band luminescence is subtracted 7, 8 from said signal 14, the presence of the diamond is sensed and its location identified 20, and the diamond is blown out of the other ore particles 2 by an ejector 23.

## Description

### Background of the Invention

The present invention relates to a method and apparatus for sorting diamonds or other specific luminesing minerals from a large number of ore particles distributed over a wide feed path, the method comprising conveying the ore particles along the wide feed path, irradiating a line across the feed path in order to excite Raman emission from the diamonds or specific luminescing minerals, using a narrow band pass filter arrangement (narrow spectral band filtering) to filter out all emission from the ore particles except said Raman emission and such broad band luminescence as has frequencies in said narrow band, giving a signal responsive to the emission which passes through the filter arrangement, sensing the presence of the diamond or specific mineral, identifying the location of the diamond or specific mineral, and, responsive to the identification of the location of the diamond or specific mineral, separating the diamond or specific mineral from the other ore particles. The minerals must luminesce in some way. Such a method and such an apparatus are disclosed in WO 88/01378, though in relation to diamonds. Using the Raman shift to sort or identify diamonds has also been described in general terms in for instance GB-A-2 121 535, GB-A-2 140 555, GB-A-2 199 657, and WO 86/07457.

It is known that when certain materials are irradiated, in addition to scattering the incident radiation, they emit radiation in the form of broad band fluorescence (wavelengths longer than the excitation wavelength), and in discrete frequencies different due to the Raman shift. The Raman frequency bands (called the Stokes and the anti-Stokes) are different from and equally spaced on either side of the frequency of the incident radiation; the frequency differences are uniquely characteristic of a material. These Raman emissions enable e.g. diamond to be identified and sorted from other materials such as spinel, calcite and zircons. Although there are two Raman frequencies, one normally looks at the lower frequency (longer wavelength) Stokes emission as it has the greater intensity under normal operating conditions.

Normally, the exciting radiation not only causes the diamond Raman emissions, but also excites other luminescences. The gangue does not exhibit Raman emission with a frequency shift characteristics of diamond. However gangue, and some diamonds, emit other wavelength radiation or fluorescence, and this gives considerable problems in identifying only the Raman radiation and hence the diamonds. The Raman emission is very weak, and can be completely swamped by the other emitted radiations.
WO 88/01378 makes no mention of troublesome background luminescence, though Figure 1 of the reference shows beam splitting.
Although the invention was developed for sorting gemstones, and specifically diamonds, from gemstone-bearing ore, it may be applicable to sorting other gemstones or minerals, such as emeralds, rubies or zircons. The emission can be detected in any suitable direction relative to the incident radiation, e.g. in the same direction (back illumination) or in the opposite direction (front illumination).

If the method is to be used commercially, large numbers of particles must be sorted per unit time; for example, when sorting ore, one should be able to sort ore which is travelling on a belt at least 0.3 m wide and generally say 1 m or 2 m wide - the particles of ore can occupy a wide path in other ways, for instance if sliding, falling or in free flight or if carried in a liquid stream. Very generally, it is desirable to be able to sort particles or objects moving in a path whose width can accommodate a number of the particles or objects. WO 86/07457 does not deal with this problem, as it is concerned with the identification of a diamond by a jeweller. GB-A-2 140 555 and GB-A-2 199 657 describe ore sorting, but the machinery used requires the ore to be fed along a narrow belt so that the ore particles are lined up in the direction of travel, and each particle is passed through the optical axis of the viewing means. WO 88/01378 uses a multiplicity of optical paths to cover a wide conveyor chute, each path being confined and being its own detector.

Normally, the exciting radiation not only causes the Raman emissions, but also excites the general background radiation. The Raman radiation is also in a very narrow band, so it is possible to reduce general background radiation using a commercially-available narrow band pass filter having a narrow pass band. In this context, "narrow" has its normal meaning as used in this art. However, more specifically, it can mean selecting a band of wavelengths which, on an energy/wave length curve, extends approximately from half-amplitude on one side of the emission being examined to half amplitude on the other side. For the invention, and particularly for Raman, the band will normally be of the order of 1 nm, say 1 nm or 2 nm, and is most unlikely ever to be greater than 10 nm. The filters used for narrow band filtering will normally be interference filters where the band is transmitted; in theory at least, a reflected narrow band could be sensed. Narrow band pass filters are also called line filters.

### The Invention

The present invention provides apparatus as claimed in Claim 1 and a method as claimed in Claim 4. The remaining claims claim optional features of the invention.

A narrow band pass filter passes its design pass frequency on its axis (zero angle of incidence), but passes slightly different frequencies off its axis. In other words, the pass frequency of the filter depends upon the angle of incidence and it is necessary for all rays to pass through the filter nearly parallel to the axis, one quoted maximum divergence being ±4° - in practice, the specific angle depends upon how sensitive the detection should be, and wider or narrower divergences may be acceptable. If rays pass through the filter at greater angles, it is possible for non-diamond material to be identified as diamond material. This does not give a problem when the objects are on the optical axis, but it does give a considerable problem when the objects are distributed over a relatively wide area. More generally, there is a danger, when sorting objects or marking defective zones of an article, that the wrong object or zone is selected due to picking up an oblique emission from an object or zone, of the wrong but adjacent wave length.

In one particular arrangement, there are collection means which allow to pass through the filter means both rays which are within said angle of incidence and rays which are outside said angle of incidence, and means for stopping any rays which have passed through the filter means outside said angle of incidence. This enables all radiation being examined to pass through the narrow band pass filter means at an angle of incidence acceptably close to zero, say within ±4°. After the narrow pass band filter means, normal optics can be used.

In use, the collection means will extend along and substantially parallel to the line being examined (though some non-parallelity may be tolerated, e.g. up to ±4°). The collection means, or at least its first component, can be any suitable component, even a simple slot. A limited sector of radiation (as seen looking at 90° to said line) passes through the narrow pass band filter means and is not stopped. Various collection means are described in EP-A-O 345 949, which can be referred to for further details.

Although examining along a line is referred to herein, it is in theory possible to examine an area having substantial width as well as length, using a suitable collection means, the line then just being one of many lines which together form the width. In general, the line need not be rectilinear.

Any means can be used for sorting the diamonds or specific minerals; the preferred way is to use a series of air jets spaced across the path of the particles, but other ways of ejecting can be used.

As described in detail in EP-A-O-345 949, it has been found that the use of the anti-Stokes signal can be advantageous. It would be possible to look at both Raman signals simultaneously, and in this way obtain additional discrimination. The material being sorted can be heated, which increases the relative strength of the anti-Stokes signal.

EP-A-O 345 949 describes various ways of detecting the Raman emission and of identifying the location of the diamond or specific mineral, and can be referred to for further details. EP-A-O 345 949 describes on-line or self calibration, or monitoring, so that a signal is given when the performance changes, e.g. due to lenses becoming dirty, or the laser output changing or the photo-multiplier working incorrectly, and can be referred to for further details.

### Preferred Embodiments

In the embodiments of the invention described below, a large number of objects are distributed over an area, which is in effect rectangular and is shown as the surface of a belt though the objects could be moved in other ways. As the belt moves relative to (and at right angles to) the irradiated line, the whole area is scanned.

The invention will be further described, by way of example, with reference to the accompanying drawings, in which:-
Figure 1 is a graph of percentage transmitted energy (%T) against wavelength in nm, showing a set of curves for various angles of incidence for a narrow band pass filter of nominal value λ nm with a nominal band width of 1.4 nm at half maximum transmissivity;
Figure 2 is a schematic side view of a first apparatus;
Figure 3 is a schematic view, taken at right angles to the view of Figure 1;
Figures 4a, 4b, and 4c are three alternative radiation spectra;
Figure 5 illustrates the output of the PMT (photo-multiplier tube) of Figure 2;
Figure 6 is a schematic plan view of the end of the belt in Figure 2;
Figure 7 is a diagram of the apparatus of Figure 2 and associated electronic components;
Figure 8 corresponds to Figure 2 but shows a second apparatus;
Figure 9 is an isometric view of a possible collection means in Figure 8;

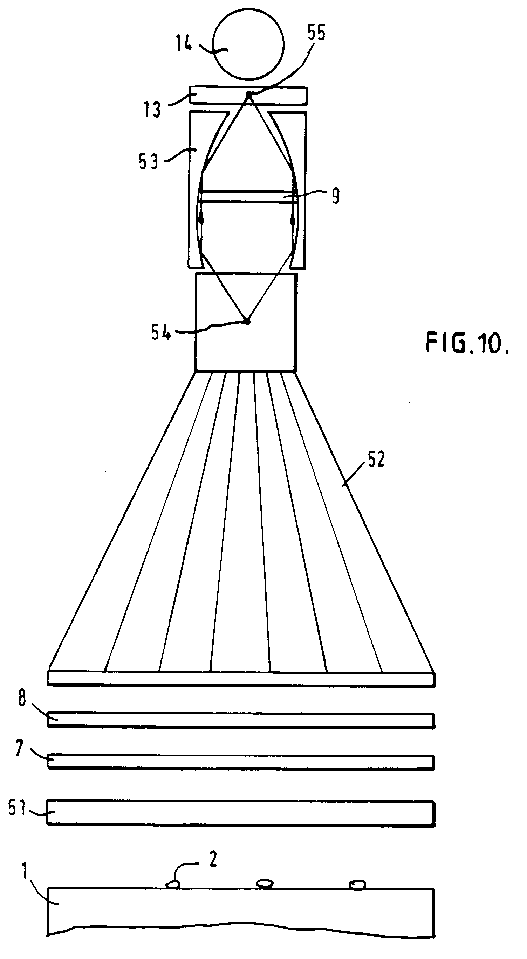

Figure 10 is a schematic view of a third apparatus;
Figure 11 is a schematic view, taken at right angles to the view of Figure 10;
Figure 12 is a schematic, isometric view illuminating a fourth technique for indicating or identifying a particle;
Figure 13 is a view looking down on the optical system of Figure 12, also showing electronic components;
Figure 14 is a schematic diagram illustrating a fifth technique for indicating or identifying a particle;
Figure 15 is a schematic diagram illustrating the principle of operation of the fifth technique;
Figure 16 illustrates the fifth technique;
Figure 17 illustrates a way of embodying the fifth technique;
Figure 18 is a schematic view illustrating a sixth technique for indicating or identifying a particle;
Figure 19 is a schematic view of a way of embodying the sixth technique; and
Figure 20 is a schematic view of an alternative way of embodying the sixth technique.

Throughout, the same references indicate the same or similar items. Variations discussed in relation to any embodiment can be applied to the other embodiments, if appropriate.

### Figure 1

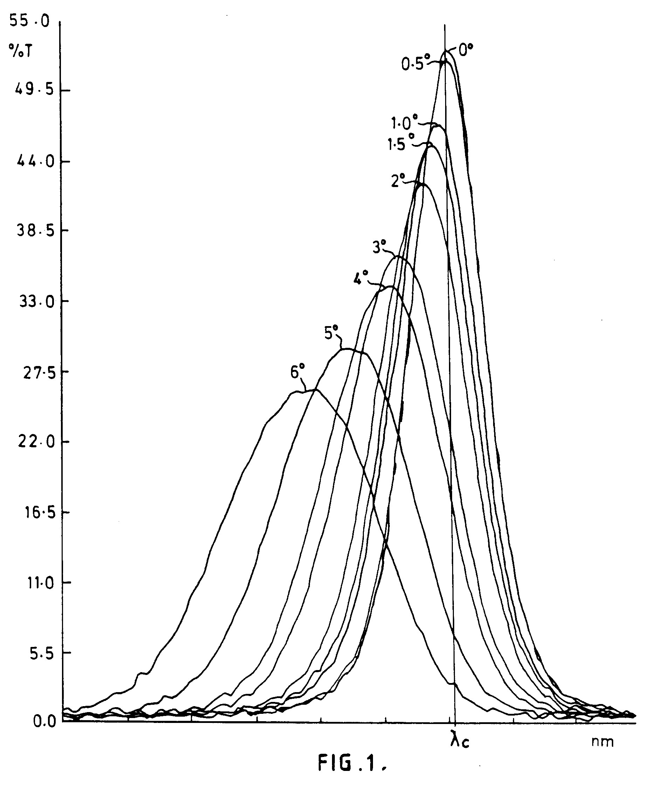

Figure 1 is discussed in EP-A-O 345 949.

### Figures 2-7

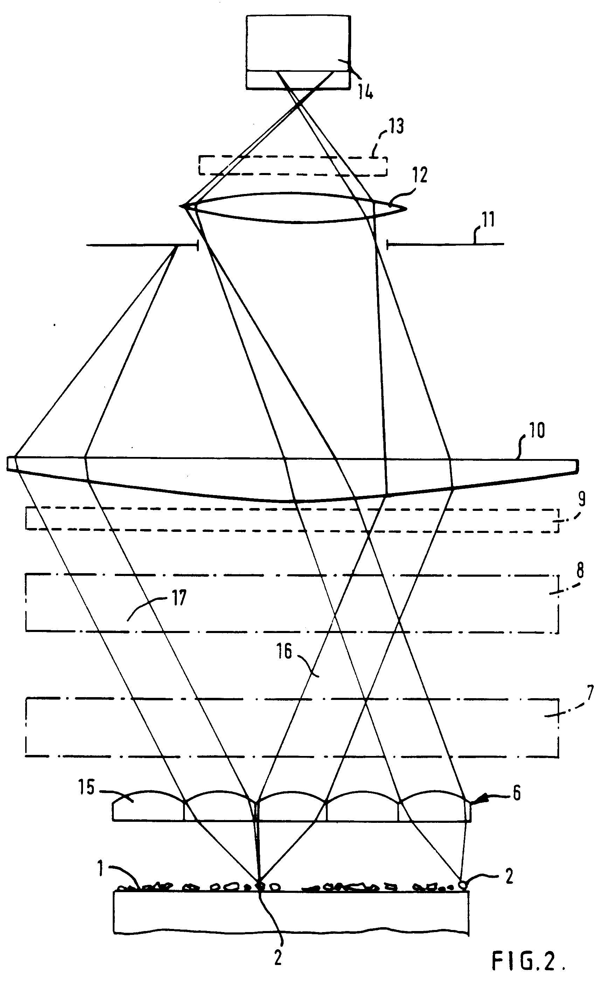

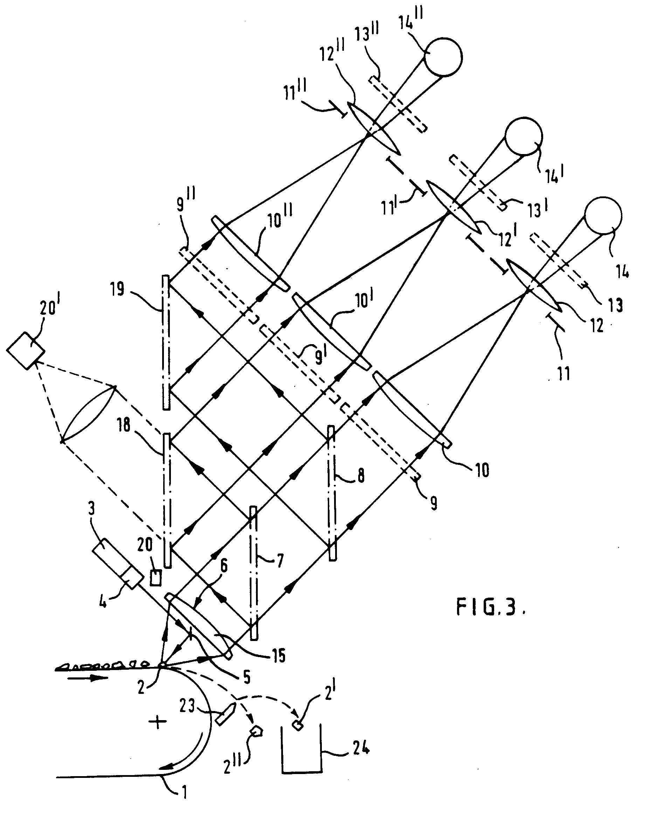

In Figures 2 and 3, a moving belt 1 (made of material which does not luminesce at the excitation frequency, i.e. at the frequency of the laser) carries a single layer of ore or gangue particles 2. The particles 2 have been formed by roll crushing, and have been screened so that they are in a predetermined size range. In general terms, it is preferred that the particles 2 should be of roughly similar size. The (plan view) occupancy on the belt 1 should be such as to reduce the effects of piling or shielding - one suitable occupancy is 5%, but it could vary for example from 4% to 80%. The sizing and occupancy can be arranged using known mechanical means.

A laser 3 projects exciting radiation along an extended line transversely of the belt 1. This can be achieved in any suitable way; for instance, the laser 3 can be scanned along the line using a scanning unit 4, in which case the laser 3 can be say a 2 watt laser. Other alternatives are possible, e.g. using a linear array of a multitude of laser diodes. The optics can be arranged in any suitable way and Figure 3 is only schematic - preferably the laser 3 is effectively on the same optical axis as the viewing system described below, so that on each ore particle 2, the same point is illuminated and examined; for instance, a narrow, transverse mirror 5 can be used - other possibilities are discussed below. A separate viewing system can be added to examine, e.g. at 90° to the incident radiation, for instance to sense a diamond on the side of a larger lump of ore, though different focal lengths and lens widths may be required.

The line is examined with a viewing system having collection means in the form of a multi-lens array 6, beam splitters 7,8, a narrow band pass or line filter 9, a converging lens 10, a telecentric stop 11, a field lens 12, a laser blocking filter 13 and a PMT 14, the PMT 14 being a sensing means and sensing the selected frequency radiation emitted by particles 2.

The filter 9 can be chosen to pass the Stokes signal or the anti-Stokes signal. A 2 nm or 1 nm band can be passed, centred on the signal in question. If the gangue is irradiated with an argon ion laser 3 operating at 514.5 nm, the principal Raman emissions of diamond consist of two sharp lines at 552.4 nm (the Stokes signal) and 481.5 nm (the anti-Stokes signal); if a helium neon laser 3 is used, operating at 632.8 nm, the principal Raman emissions of diamond consist of two sharp lines at 691.1 and 583.6 nm.

The collection means usually extends parallel to the irradiated line on the belt 1, and in effect has individual sections formed by an array of side-by-side converging elements or lenses 15 forming the multi-lens array 6. Each lens 15 is of elongate, rectangular shape as seen looking along the optical axis, arranged so that in the plane normal to the optical axis, the geometrical major axes of the lenses 15 are parallel and at 90° to the irradiated line. The ore particles 2 are roughly at the focus of the lenses 15 so that each individual lens 15 provides roughly parallel rays from points on the particles 2. As can be seen in Figure 3, each lens 15 has a long dimension parallel to the direction of movement of the belt 1, and thus captures a large amount of radiation coming from each particle 2, having an f number of 1 or less. As can be seen from Figure 2, each lens 15 is narrow across the belt 1, having an f number of 7 or more. Thus each lens receives a three-dimensional sector of emission from the particles 2 on the belt 1; this sector, as seen looking along the irradiated line, is substantially larger than as seen looking at 90° both to the line and to the optical axis. The roughly parallel rays are focused by the converging lens 10 roughly in the plane of the telecentric stop 11. As illustrated diagramatically in Figure 2, the effect of this is (ideally) that rays which pass through a lens 15 which is not immediately above a particle 2 are stopped by the stop 11; Figure 2 illustrates two ray bundles 16,17 from an object 2 which is nearly on the boundary between two lenses 15; the ray bundle 16 from the lens 15 above the object 2 is not stopped whereas the ray bundle 17 from the adjacent lens 15 is stopped. In practice, there may be a little overlap, a particle 2 nearly on the boundary being sensed through two lenses 15, but this need not matter though it gives rise to the periodicity referred to above. Thus the ray bundle having the greater angle of incidence on the filter 9 is stopped, and the viewing system can be arranged such that any ray having an angle of incidence greater than ± 4° (or any specific, chosen angle) is stopped. In this way, as seen looking at 90° to the irradiated line, just a limited, relatively narrow sector of the radiation from each part of the line is sensed and analysed. The width of each lens 15 and the number of lenses 15 needed to cover the inspection zone is determined by the geometrical constraints outlined above; however, with lenses 15 of focal length 70 mm and a chosen acceptable filter angle of incidence of ±4°, 100 lenses 15 per metre width of belt are desirable. The optical axis of each individual lens 15 is substantially normal to the filter 9. The stop 11 can have a rectangular aperture, say 10 mm wide for examining a belt width of 300 mm.

In the other plane, looking along said line (Figure 3), there is no problem with rays of high angles of incidence passing through the filter 9 as the radiation is emitted just from one scan line across the belt 1 - particles 2 on either side of the scan line are not irradiated and there are no off axis images.

The viewing system may pick up specular reflection of the laser radiation, of very great intensity compared to the Raman intensity. The laser blocking filter 13 is included as a significant amount of the laser wavelength will pass through the filter 9. The laser blocking filter 13 is not angularly dependent and can be placed anywhere in the optical system, but it is preferably placed immediately in front of the PMT 14 as only a smaller diameter is required in this plane. The laser blocking filter 13 can be a glass absorption filter and the amount of blocking can be chosen by choosing the correct thickness of glass.

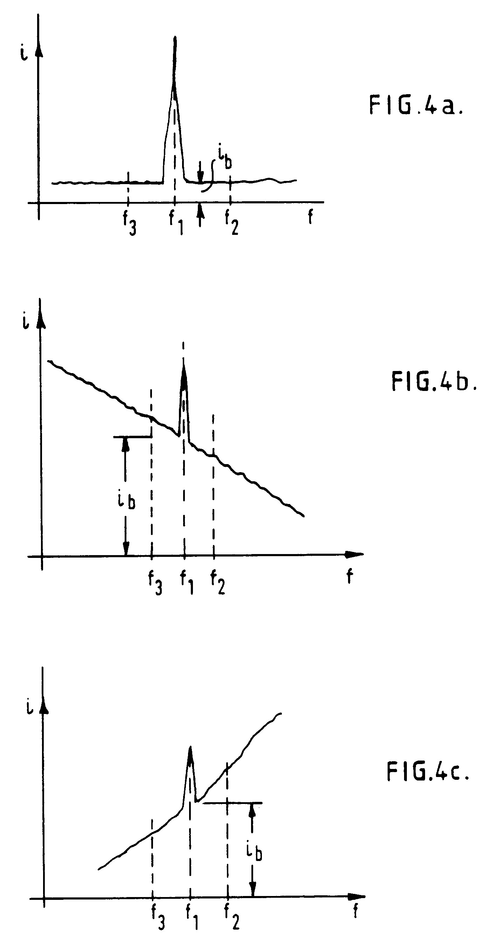

Any number of beam splitters can be used in the optical system in order to abstract part of the radiation for specific purposes. As shown in any of Figures 4a, 4b and 4c, which are graphs of intensity (i) against frequency (f) for the emission of excited radiation by diamond, the Raman frequency f₁ (the Stokes signal or the anti-Stokes signal, whichever is chosen) is against a background radiation i_{b} at the same frequency - the Raman radiation is just a small blip in a luminescence spectra. Although it is not essential to subtract the background radiation, better sensing and higher accuracy are obtained if this is done. In effect, the background radiation is sensed at two different frequencies f₂,f₃ close on either side of the Raman frequency f₁, many relations of f₁, f₂ and f₃ may be used in a processing algorithm, one of which may be such that the signals of the frequencies f₂,f₃ are averaged, and the average is subtracted from the signal sensed at frequency f₁, thus distinguishing the Raman signal from the background signal. The frequencies f₂,f₃ can for example be 15 nm on each side. Using the beam splitters 7,8 and associated mirrors 18,19, part of the beam is directed into respective band pass filters 9',9'', converging lenses 10',10'', telecentric stops 11',11'', field lenses 12',12'', laser blocking filters 13',13'' and PMT's 14',14''. However any suitable geometric arrangement can be used. The band pass filters 9',9'' pass the frequencies f₂,f₃. As the frequencies f₂,f₃ are not critical, a relatively wide band, e.g. 10 nm wide, can be sensed and the band pass filters 9',9'' allow a correspondingly wide band of frequencies to pass; the band will be a multiple of the band passed by the filter 9. This arrangement means that the beam splitters 7,8 only need to split off just a small proportion, say 4% or 5% of the radiation.

Various techniques can be used to indicate or identify the particle 2 which emitted Raman radiation.

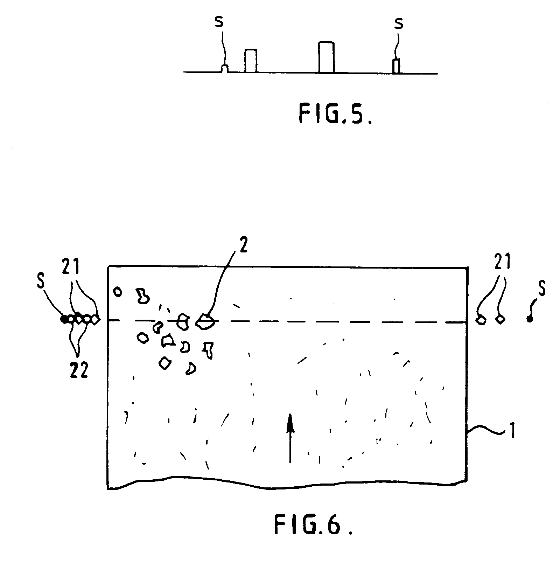

According to a first technique, a single PMT 14 can be used even if the belt 1 is very wide, scanning the exciting radiation with a scanning frequency which will depend upon the belt width and the speed and size of the particles; alternatively, a number of modules can be used with a corresponding number of PMT's, the same principle being employed in each module. If the exciting radiation is simply scanned, or if it is effectively scanned by spacing a number of time-division multiplexed lasers along the scanning line, a simple time domain technique indicates or identifies which particle 2 has emitted Raman radiation. Figure 5 illustrates the signal from the PMT 14. Markers S, which can be adjustable physical stops or luminescing tracers, define the ends of the irradiated line (see Figure 6) and give start and end registrations on the output signal. Knowing the start and end of scan, via the markers S, the location of the specific particle 2 is determined. In other words, the location of the particle 2 from which the narrow band radiation is emitted is identified from the position of the scan at the instant of detection of the emitted radiation.

As a single, general technique, and particularly if the exciting radiation is not scanned (being e.g. X-radiation), it is possible to incorporate position-sensitive sensing means 20 or 20' sensitive to radiation such as general background luminescence (strong luminescence) emitted by diamonds and positioned such that the further sensing means 20 or 20' sense radiation which has not passed through the filter 9. Any Raman signal (weak luminescence) from a particle 2 detected by the PMT 14 indicates the presence in the irradiated line of a specific particle 2 to be sorted. The signal from the PMT 14 is passed (e.g. via an amplifier) to the module 39 and the positional signal from the sensing means 20 or 20' can be passed through an amplifier to a registration module which analyses the position of the signal from the sensing means 20 or 20' with respect to the width of the belt and gives a signal to the module 39 which includes time and position. When simultaneous signals are received from the PMT 14 and the sensing means 20 or 20', the air jet control 41 (see below) actuates an appropriate air jet 23 in accordance with the positional signal from the registration module and the specific particle 2 is blown out of its normal path.

The further sensing means 20 or 20' not only detect the presence of the specific particle 2 but also give a signal indicating its position. Thus a specific particle 2 is indicated when the PMT 14 and the sensing means 20 or 20' sense simultaneously. When sorting diamonds from ore, this can give a high confidence particle sort.

The further sensing means 20 may be a CCD camera or array or a position sensitive PMT.

A preferred arrangement is to have a scanned 1024 element CCD array 20 (or 20') behind a micro-channel plate signal intensifier, the information being taken off along a single channel by scanning or multiplexing. Very accurate positional information is given, but only a very simple optical system is required. Knowing the start and end of scan, via the markers S, the belt 1 can be sectioned in tracks according to groups of the CCD pixels, which groups can activate individual air jets 23 (see below).

The sensing means 20 can be provided with a laser line (narrow band) rejection filter for laser exciting radiation, or with a pass filter in the X-ray luminescence band (say 280 to 300 nm) for X-ray exciting radiation. However, if occupancy is being monitored, a laser pass filter is used for laser exciting radiation, to employ the laser wavelength.

As shown in Figure 3, the sensing means 20 is preferably outside the viewing system, though (as shown in Figure 3 at 20' as an alternative arrangement) it could be in the viewing system after the lens array 6, with a suitable beam splitter 18. As a further alternative, the sensing means 20' can be incorporated as well as the sensing means 20 and serve a different purpose, namely to view across the width of the belt 1 in order to monitor the occupancy of the belt 1; the occupancy can be altered by automatically changing the feed in a known way.

Using the second technique, an unscanned e.g. X-ray source 3 can be used to irradiate the line across the belt 1. Here the three channels of the module 6, 9 - 14 can have filters 9, 9', 9'' of 1 or 2 nm width, allowing to pass the luminescent peak and the wavelength at full width half maximum points; as the diamond luminescence is distinguished by being semi-Gaussian, discrimination can be obtained, at least for specific types of diamond. The peak may be between 400 and 500 nm (depending on the luminescence mechanism of the specific type of diamond), and the filters 9', 9'' 150 nm on either side of the peak.

According to a third technique, the sensing means 20 or 20' can be omitted. The scan line is scanned by a single laser 3, but the laser 3 is pulsed with a pulse frequency which is varied in some way across the scan; for instance it can be ramped from 1 MHz to 2 GHz from one end of the scan line to the other. When a diamond 2 is detected, a modulation burst is superimposed on the signal on the main PMT 14, due to the emission of Raman luminescence from the diamond 2. The frequency of response of the main PMT 14 corresponds to the position in the scan line from which the Raman luminescence is emitted. The frequency of response can be determined by a microprocessor which includes suitable electronics to demodulate the PMT signal and compare it with positional signals indicating the position of the source of the emitted signal, i.e. of the diamond 2. Heterodyne detection can be used, in the module 39 referred to below.

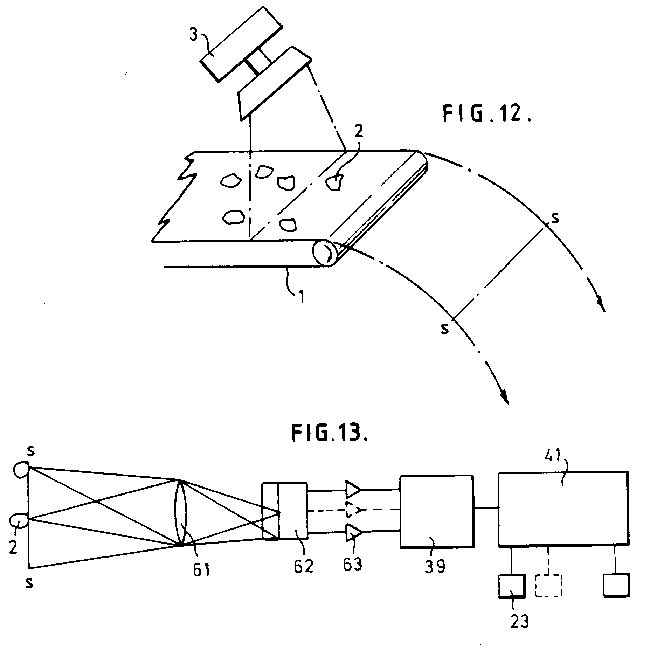

According to fourth, fifth and sixth techniques, the method described below with reference to Figures 12 and 13, Figures 14 to 16 and Figures 18 to 20, respectively, can be used.

The system shown in Figures 2 to 7 has three channels, namely a main detection channel for one of the Raman frequencies, and two side channels. For more accurate sorting, more channels could be used, for example a further main detection channel for a different frequency emitted signal and its own two side channels.

In some arrangements, there is no need of the beam splitters or other arrangements for subtracting background radiation. In some cases, all diamonds except type IIb diamonds can be distinguished by their luminescence - type IIb diamonds do not luminesce but do emit Raman radiation. Using a rather wider band pass filter 9 (which however still gives angle of incidence problems) and a laser blocking filter 13, all the diamonds can be indicated or identified.

It is possible to place a broad pass band filter in front of the narrow pass band filters 9, 9', 9'', e.g. to select a broad band with a Raman frequency in the middle.

Any of the components in the viewing system can be replaced by equivalent components - for instance, holographic plates or mirrors or parabolic concentrators can be used instead of ordinary or Fresnel lenses; the field lenses 12, 12' and 12'' could as a further alternative be replaced by inclined mirrors or light tubes. Precise focussing is not required, only the collection of the appropriate photons.

The optics of the laser 3 may be different. For instance, the mirror 5 could be behind the collection lenses 15, or an aluminised strip could be provided on the beam splitter 7 with a gap formed in the mirror 18; in such a case, a long slot can be formed in the collection lens array 6, or the lens array 6 can be used to focus the laser beam cylindrically along the scan line.

Figure 6 illustrates a monitoring means for self-calibration on-line (i.e. without stopping sorting), or for giving a signal to indicate that there is a malfunction. A line S-S is scanned on the belt 1 from point S to point S. On each side of the belt 1 there are first zones represented by tracer stones 21, which may be made of synthetic diamonds mixed with epoxy resin, on one side of the belt 1 there are two second zones or beam dumps in the form of holes 22 which absorb all radiation. Using a suitable detector, e.g. the CCD camera 20' shown in Figure 3, the radiation from the tracer stones 21 and holes 22 can be sensed and processed to give signals, automatically, e.g. to increase or decrease the gain of the PMT's 14, 14' and 14''. The signals generated by the tracer stones 21 and holes 22 can be integrated over say 6 seconds to reduce random effects.

Figure 3 illustrates schematically a row of air jets 23 for selecting (i.e. indicating or identifying) diamonds 2' by blowing them out of the trajectory followed by non-diamond material 2'', a diamond-receiving bin 24 being schematically indicated; naturally any other particle that also meets the selected criteria will also be selected.

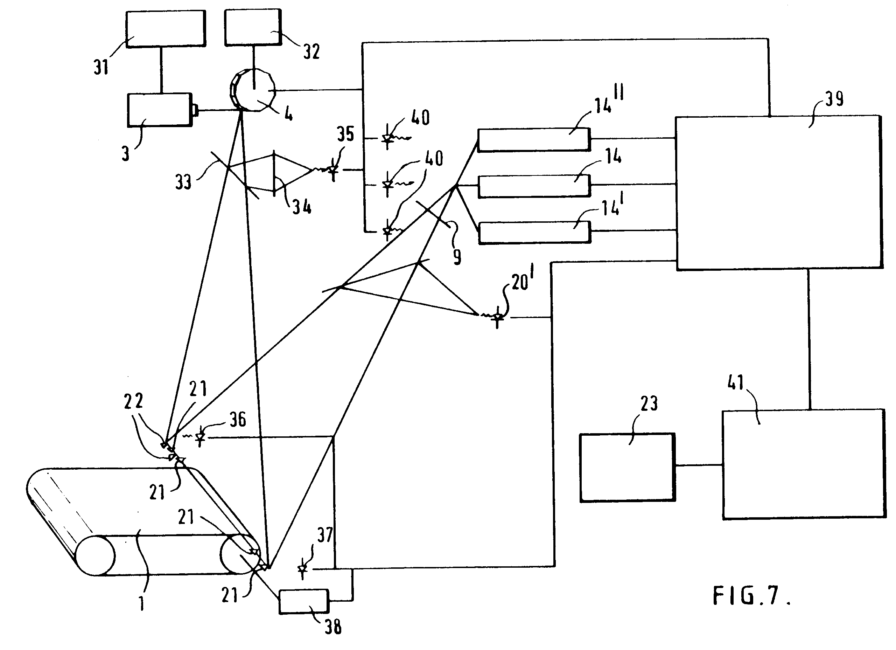

Figure 7 illustrates the identification and control system. The following further items are illustrated in Figure 7, but their function and interconnection need not be described in detail: laser drive and shutter control 31, scan (polygon) motor drive 32, beam splitter 33, grating 34 and associated lens system, photo sensor 35, start and end of scan detectors 36, 37, belt speed encoder 38, measurement and test module 39 (a microprocessor), test light emitting diodes 40, and air jet control system 41.

Any suitable scan frequency can be used for the radiation. The scan will normally be simple direction without fly-back, e.g. using a rotating 64 facet polyhedric mirror as the scanning unit 4. Assuming point focus (which could be in a plane spaced above the belt at half the expected particle height), a 133 Hz scan at a belt speed of 1.6 m/s and with a 300 mm scan width gives 1/2 mm resolution, suitable for 1 mm particles; a 400 Hz scan at a belt speed of 5 m/s and with a 1000 mm scan length gives 1 mm resolution, suitable for 3 mm particles.

If the belt 1 is very wide, two or more lasers 3 and/or two or more of the optical modules 6 to 14 can be used side-by-side.

### Figures 8 and 9

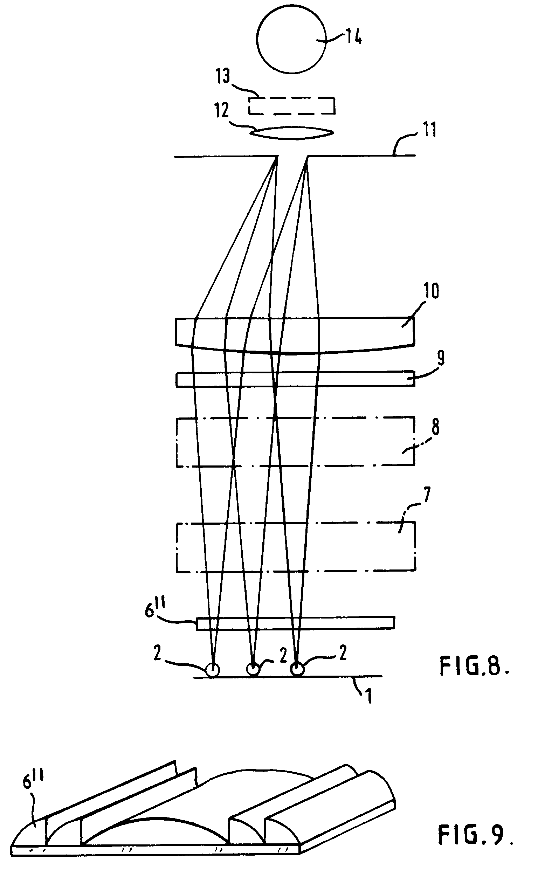

Figure 8 corresponds to Figure 2 and items performing the same functions are referenced with the same references and not further explained. The most significant difference is that a cylindrical lens 6'' is used instead of the multi-lens array 6 of Figures 2 and 3. Figure 3 shows the arrangement of Figure 8, as seen looking along the line. The lens 6'' can be aspheric and/or a Fresnel lens, a Fresnel lens being shown in Figure 9, and corrects aberrations and increases the f No.

The stop 11 is in the focal plane of the lens 10, which is a normal spherical lens. This means that as seen looking along said line (Figure 3), the rays are focussed in the plane of the stop 11, whereas as seen looking at 90° to said line (Figure 8), the rays are focussed behind the plane of the stop 11. Nonetheless, as seen from the ray bundle shown in Figure 8, the stop 11 stops out any rays which have an angle of incidence greater than a predetermined maximum on the narrow band pass filter 9.

With a cylindrical lens 6'' of focal length 70 mm, it is possible to have a depth of focus of approximately ±10 mm. The depth of focus can be increased if the length and size of the optical system is increased.

### Figures 10 and 11

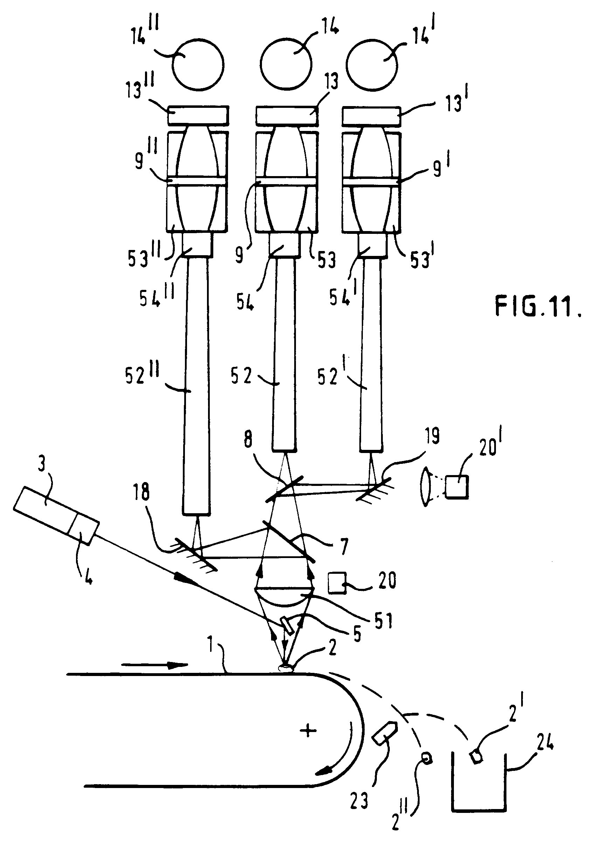

There is a collection means extending parallel to the irradiated line on the belt 1, and comprising a cylindrical lens 51 and an acrylic light pipe (also known as a light tube, line array system or a concentration collection assembly) 52. The cylindrical lens 51 can be a Fresnel lens, and need not be of circular cross-section. The lens 6 collects and focuses the light emitted from the objects 2 on the line, forming a line image at the input of the light pipe 52, acting as a light guide. The light pipe 52 is merely a fan-shaped arrangement of reflecting partitions with a top and bottom. This translates the line image into a circular image at the output end of the light pipe 52, but the light leaving the light pipe 52 leaves at all angles of incidence - the cylindrical lens 51 should be positioned at such a distance from the particles 2 that it maximises energy collection (as seen in the plane of Figure 11) into the light pipe 52. The light is collected by a compound parabolic concentrator (CPC) 53, which, as shown in Figure 2, collects the light from one focus 54, collimates it within the CPC, i.e. forms the rays into a bundle of roughly parallel rays, and re-focuses it at the second focus 55. The narrow band pass filter or line filter 9 is placed in the centre plane of the CPC 8, normal to the optical axis, i.e. within the region of roughly parallel light.

The filter 9 can be as described above in relation to Figures 2 to 7.

The CPC 8 is followed by the laser blocking filter 13 and a photo-multiplier tube (PMT) 14.

As in Figures 2 to 7, in the other plane, illustrated in Figure 11, there is no problem with rays of high angles of incidence passing through the line filter 11.

As in Figures 2 to 7, any number of beam splitters can be used in the optical system in order to abstract part of the radiation for specific purposes, and any suitable geometric arrangement can be used.

For more accurate sorting, more channels could be used, for example a further main detection channel for a different frequency emitted signal and its own two side channels.

As discussed above, there may be no need of the beam splitters or other arrangements for subtracting background radiation.

Various techniques can be used to indicate or identify the particle 2 which emitted Raman radiation, as described above with reference to Figures 2 to 7.

As mentioned in relation to Figures 2 to 7, it is possible to place a broad pass band filter in front of the narrow pass band filters 9, 9', 9'', e.g. to select a broad band with a Raman frequency in the middle.

Any of the components in the viewing system can be replaced by equivalent components - for instance, holographic plates or mirrors or parabolic concentrators can be used instead of ordinary or Fresnel lenses. The light pipes 7, 7', 7'' could as a further alternative be without internal fan-shaped walls, or be replaced by two inclined mirrors, or by bundles of fibres, e.g. of decreasing cross-section. The CPC's 8, 8', 8'' could be without their second half, other optics being used behind the filters 9, 9', 9''. The CPC,s 8, 8', 8'' could be just two parallel plates in the section of Figure 3. Precise focussing is not required, only the collection of the appropriate photons.

The optics of the laser 3 may be different, as mentioned in relation to Figures 2 to 7. Monitoring means for self-calibration on-line can be included, as described in relation to Figures 2 to 7.

### Figures 12 and 13

In an alternative system, say with X-radiation, the sensing means 20 described above with reference to Figures 2 to 7 can be used alone without the remainder of the optical systems, though with suitable filtering, to detect luminescence, which need not be Raman and can be e.g. broad band luminescence. However, a preferred system is shown in Figures 12 and 13.

The embodiment illustrated in Figures 12 and 13 is much simpler than that specifically described in Figures 2 to 7.

A line of X-ray radiation is projected transversely across the belt 1 using any suitable X-ray device 3, and the luminescence, if any, of the particles 2, is detected after the particles 2 have been projected off the end of the belt 1, along a line S-S indicated in Figure 12. The detection uses the simple optical apparatus illustrated in Figure 13, comprising a lens system 61 and a PMT 62. The PMT 62 is connected through amplifier 63 to a micro-processor 39 in turn connected to air jet drives 41 which energise one of a number of air jets 23 distributed across the width of the path of the particles 2, in order to blow out of the path into a sort bin any particle selected by the micro-processor 39.

As represented in Figure 13, the image of the luminescing particle 2 is focused on the detecting plane of the PMT 62. The PMT 62 is scanned to determine whether there is an image on the detecting plane, in other words the detecting means is scanned across the particles 2, and a simple time domain technique indicates or identifies which particle 2 has emitted the luminescence. The signal from the PMT 62 will generally be as in Figure 5.

Any suitable scanning frequency can be used for scanning the PMT 62. For instance with a 1 m wide conveyor travelling at 3 m/s, 400 Hz is suitable; with a 300 mm wide conveyor 1 travelling at 1.6 m/s, 133 Hz is suitable.

As an alternative to using the scanned PMT 62, a scanned CCD array can be used, for instance a scanned 1024 element CCD array behind a micro-channel plate signal intensifier. Knowing the start and end of scan, via the markers S, the path of the particles 2 can be sectioned or divided into tracks according to groups of the CCD pixels, which groups can activate individual air jets 23. The CCD array can have a fixed internal clock, being scanned at say 2 MHz.

### Figures 14 and 15

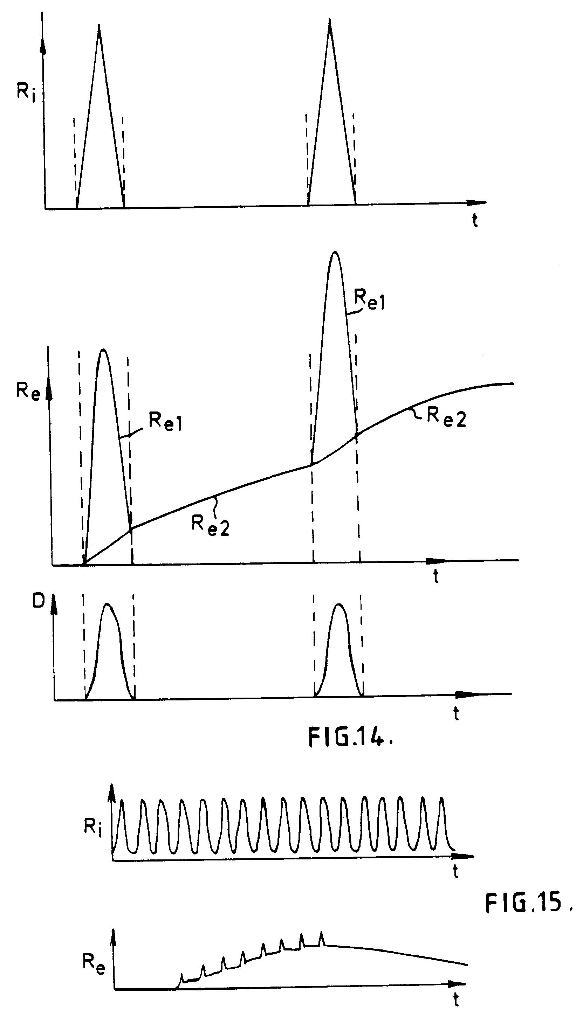

Figure 14 shows three schematic graphs against time, Rᵢ being the incident, exciting radiation, Rₑ being the emitted radiation and D being the detection. In the Rₑ/t graph, Rₑ₁ is the Raman emission and Rₑ₂ is fluorescence.

The exciting radiation is pulsed as in the Rᵢ/t graph and the detector is activated, or its output signal is chopped, as in the D/t graph. It will be seen that the detector is effective when the Raman emission Rₑ₁ is near its maximum and the other luminescent radiation Rₑ₂ has not risen so far as to interfere with the detection of the Raman emission Rₑ₁, i.e. the detector does not effectively detect emitted radiation which has a substantially longer rise time than the Raman emission Rₑ₁. By keeping the pulse length short relative to the pulse frequency, the intensity of the other luminescence remains low and the Raman emission is either of greater intensity than the other luminescence, or at least of sufficient intensity to be detectable.

Figure 15 shows, on a much longer time scale t, the exciting radiation R₁ and the emitted radiation Rₑ when a diamond is detected, i.e. when the scan passes over a diamond. The detector signal will be similar to that of the emitted radiation. The modulation burst indicates Raman emission and hence the presence of the diamond. The Raman emission can be distinguished by suitable thresholding which removes the background signal caused by other luminescence, or can be distinguished by heterodyne detection or any suitable demodulation electronics.

### Figure 16

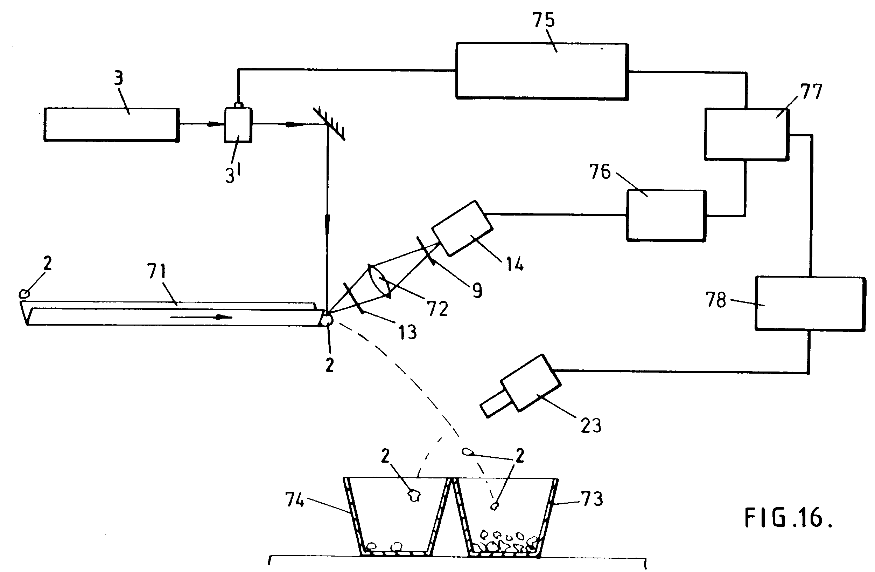

Figure 16 shows a simple practical arrangement, in which a V-belt 71 is used as a single particle feeder (a similar single particle feeder such as a pick-up wheel may be used). The objects or particles 2 are fed onto the belt 71 in any suitable way, and at the end of the belt pass through a beam projected by a laser 3 with an optical laser beam modulator 3'. The modulator 3' modulates the beam in a generally sinusoidal manner. At the point where the beam strikes the particles 2, the particles 2 are examined by an optical collection system 72 and a detector 14 in the form of a PMT. Suitable filters are incorporated, a laser wavelength blocking filter 13 and a narrow band pass filter 9 being shown. As the particles 2 are projected off the end of the belt 1, they pass suitable ejection means, shown as an air jet 23. Reject particles 2 (which would be the vast majority in the case of gangue sorting) do not cause the air jet 9 to be operated and pass into a reject bin 73. Selected particles cause the air jet 23 to be operated and are blown out of their normal trajectory into a sort bin 74.

In one embodiment using a 2 watt argon ion laser 3, the laser wavelength is 514.5 nm, modulated at a frequency of 1 GHz. 552.4 nm Raman emission (the diamond Stokes emission) can be observed using a 1 nm wide band pass for the filter 8, provided the background is subtracted by ratioing the backgrounds at 537 and 567 nm generally as described in EP-A-O 345 949. Alternatively, a 5 nm band can be used for the pass filter 8, with no background subtraction. It is believed possible, and may be preferable, to observe the 481.5 nm anti-Stokes emission, in a similar manner. The modulator 31 can be a Bragg cell, or the laser 3 and modulator 31 can be replaced by a mode-locked laser. The PMT 14 can be a microchannel plate PMT, which has a very fast rise time.

Another embodiment uses a helium-neon laser operating at 632.8 nm, its principal Raman emissions for diamond consist of two sharp lines at 691.1 nm (Stokes) and 583.6 nm (anti-Stokes).

The electronic circuitry includes a demodulator drive 75 for the beam modulator 4, an amplifier/power supply unit 76, a demodulator 77 for the signal from the PMT 14, and a microprocessor 78 with the necessary logic for identifying the Raman emissions from e.g. diamonds and activating the jet 23.

### Figure 17

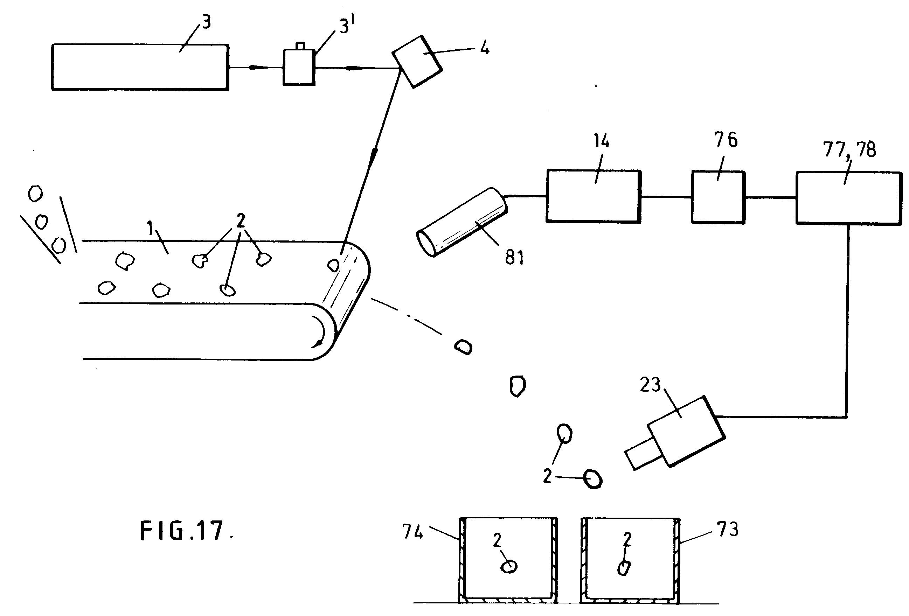

In Figure 17, the beam from the laser 3 is scanned across a wide belt 1 using a suitable scanning system 4 (e.g. a galvonometer or rotating polygon). In this way, the laser beam is scanned across the belt 1 just before the particles 2 are projected off the belt. A suitable light collecting system 81 is used. The system 81 has a wide aperture and a narrow band pass filter with the optics arranged so that the angle of incidence on the filter is within acceptable limits. Figures 2 to 7 above disclose one suitable system.

### Figures 18 to 20

In general, each embodiment has two optical detection modules 91, 91', each of which comprises an efficient optical signal collection system schematically represented at 6, 6', a narrow band pass filter 9, 9', a blocking filter 13, 13' for the exciting radiation, and a detector 14, 14'. The optical signal collection system can be the system described with reference to Figures 2 to 7. The detector 14, 14' can be any suitable detector, such as a PMT or a diode. Each detector 14, 14' is selected and operated in a mode to enhance its time resolution characteristics. The detectors 14, 14' are connected through amplifiers 92, 92' to a microprocessor 39 whose output signal is passed to an air jet logic 41 which actuates one or more air jets 23 to eject the required particle 2 from its normal trajectory.

The first module 91 detects the signal given by the particle 2 during excitation. The second module 91' detects the signal, if any, from the same particle (i.e. from the same zone) after the particle 2 has passed through the exciting radiation. A decision is made on the two signals in the microprocessor 39, whether the particle 2 is of interest and should be ejected. In one specific arrangement, the Raman luminescence (preferably the Stokes, though the anti-Stokes, may be usable and better) is detected by the first module 91 and the broad band fluorescence background is detected by the second module 91'. The signal given by the second module 91' is subtracted from the signal given by the first module 91, to determine if Raman radiation is present on the signal detected by the first module 91.

In an alternative arrangement, using different narrow band pass filters 9, 9', different wavelengths can be detected by first and second modules 91, 91'.

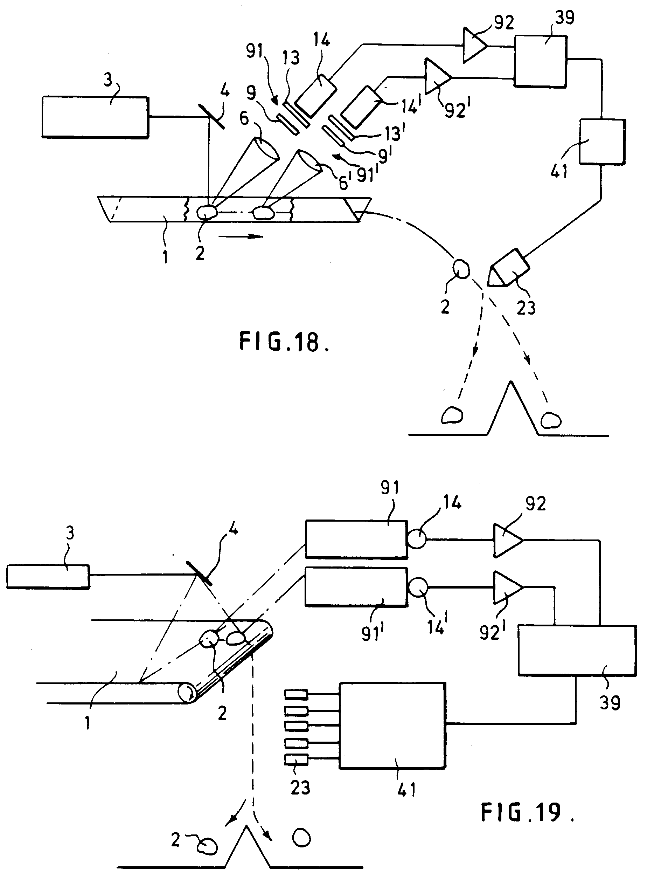

Figure 18 shows an arrangement in which a fast-moving V-belt 1 confines gangue particles 2 on the belt 1 to travel along a straight line (as seen in plan). The irradiating means 3, which may be a laser, illuminates a spot in the centre of the belt 1.

Figure 19 shows an arrangement in which a wide belt 1 is used. A line across the belt is irradiated using the means 4 which can be a scanner provided with an encoder connected to the microprocessor 39, or (particularly if the radiation is X-ray, for instance a tungsten target X-ray tube operating at 40 kev), merely spreads the radiation along a transverse line. The optical modules 6, 6' examine the whole width of the belt 1 and detect the position of the required particle 2 across the belt, the appropriate air jet 23 being energised.

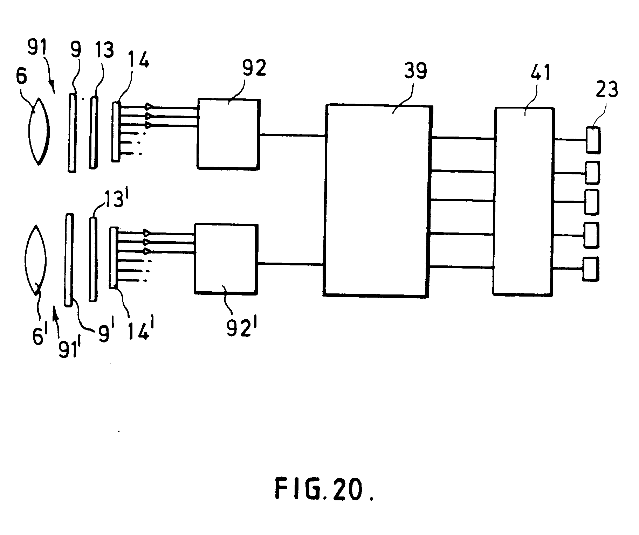

Figure 20 shows an arrangement in which the optical systems 91, 91' can be much simpler, the detectors 14, 14' being intensified CCD arrays each inspecting a section of, or track along, the belt 1 and aligned with the corresponding CCD element of the other optical system. The individual CCD elements are connected through amplifiers 92 in a conventional manner so as to be able to give positional signals.

The time interval between the two detection modules 91, 91' will depend upon the luminescence being detected and analysed, but one arrangement provides an interval of 0.1 - 0.5 seconds, with a belt speed of 1 - 5 ms and the modules 0.5 m apart. The time interval will depend upon physical limitations in designing the apparatus. The distance apart can be 50 nm, achievable using mirrors.

Beam splitters (not shown) and additional optical channels can be incorporated to enable a number, say three, of different wavelength bands to be examined for attenuation.

### Examples

This can be carried out using the apparatus of Figure 18. The first module 91 detects anti-Stokes Raman from diamonds and the second module 91' detects broad band luminescence from diamonds. Belt speeds are 1.6 m/s for Example 1 and 3 m/s for Example 2. The laser (Argon ion) wavelength is 514.5 nm. Filters 9, 9' are centred at 552.4 nm with a pass band of 1 or 2 nm. For sorting, a signal at the first module 91 and not at the second module 91' indicates Raman and hence diamond; a signal at the first module 91 and also at the second module 91' indicates luminescence and (usually) not diamond - most diamonds have a luminescence which is short compared to that of gangue materials.

The present invention has been described above purely by way of example, and modifications can be made within the invention.

## Claims

1. Apparatus for sorting diamonds or other specific luminescing minerals from a large number of ore particles (2) distributed over a wide feed path (1), the apparatus comprising means (1) for conveying the ore particles (2) along a wide feed path means (3,4,5), means for irradiating a line across the feed path (1) in order to excite Raman emission from the diamonds or specific luminescing minerals, collection means (6,6' or 52) into which will pass emission from the ore particles (2), a narrow band pass filter arrangement (9) arranged to filter out all of the emission from the ore particles (2) except said Raman emission and such broad band luminescence as has frequencies in said narrow band, sensing means (14) for giving a signal responsive to the emission which has passed through the filter arrangement (9), means (14, 20, 20', 62, 77, 91', or 92') responsive to the location from which the Raman emission is emitted, for identifying the location of the diamond or specific mineral, and sorting means (41, 23) responsive to said location responsive means (14 etc) for separating the diamond or specific mineral from the other ore particles (2), characterized in that the collection means (6,6' or 52) provides an aperture having an f number of one or less in the view looking across the feed path (1), and the apparatus comprises means (7,18,9',10',12',14' or 8,19,9'',10'',12'',14'') for subtracting from said signal the effect of said broad band luminescence which has frequencies in said narrow band, thereby providing a signal indicating the presence of the diamond or specific mineral.

2. The apparatus of Claim 1, wherein the collection means (6,6' or 52) provide an aperture having an f number of seven or more looking down onto the feed path (1).

3. The apparatus of Claim 1 or 2, wherein said subtracting means (7, etc) comprise means (13',14',13'',14'') for sensing frequencies on either side of said narrow band, and means (39) for providing a signal corresponding to the broad band luminescence which has frequencies in said narrow band, on the basis of the frequencies sensed by said means (13',14',13'',14'') for sensing frequencies on either side of said narrow band.

4. A method of sorting diamonds or other specific luminescing minerals from a large number of ore particles (2) distributed over a wide feed path (1), the method comprising conveying the ore particles (2) along the wide feed path (1), irradiating a line across the feed path (1) in order to excite Raman emission from the diamonds or specific luminescing minerals, using a narrow band pass filter arrangement (9) to filter out all emission from the ore particles (2) except said Raman emission and such broad band luminescence as has frequencies in said narrow band, giving a signal (14) responsive to the emission which passes through the filter arrangement (9), sensing the presence of the diamond or specific mineral, identifying (14,20,21',62,77,91' or 92') the location of the diamond (2) or specific mineral, and, responsive to the identification of the location of the diamond or specific mineral, separating (23) the diamond or specific mineral from the other ore particles (2), characterised in that emission is collected from the ore particles using collection means (6, 6' or 52) providing an aperture having an f number of one or less in the view looking across the feed path (1), and in that there is subtracted from said emission-responsive signal (14) the effect of said broad band luminescence which has frequencies in said narrow band (7,18,9',10', 12'14' or 8,19,9'',10'',12'',14'').

5. The method of Claim 4, wherein the collection means provide an aperture having an f number of seven or more looking down on the feed path (1).

6. The method of Claim 4 or 5, wherein the effect of said broad band luminescence is subtracted from said signal by sensing (13',14',13'',14'') the broad band luminescence on either side of said narrow band and thereby determining (39) the effect of said broad band luminescence within said narrow band.
